# EUROPÄISCHE PATENTSCHRIFT

(11) **EP 1 107 930 B1**
(45) Veröffentlichungstag und Bekanntmachung des Hinweises auf die Patenterteilung: **06.11.2002**
(21) Anmeldenummer: 99939384.6
(22) Anmeldetag: 20.07.1999
(51) Int. Cl.: C01B 35/00

(54) **VERFAHREN ZUR HERSTELLUNG VON HOCHREINEM LIBF4**
METHOD FOR PRODUCING HIGHLY PURE LIBF 4?
PROCEDE POUR LA PRODUCTION DE LiBF 4? DE GRANDE PURETE

(30) Priorität: 06.08.1998 DE 19835595
(43) Veröffentlichungstag der Anmeldung: 20.06.2001
(73) Patentinhaber: BASF AKTIENGESELLSCHAFT, 67056 Ludwigshafen (DE)
(72) Erfinder: FRIEDRICH, Holger, D-67240 Bobenheim-Roxheim (DE); SIMON, Joachim, D-68161 Mannheim (DE)
(86) Internationale Anmeldenummer: EP9905169
(87) Internationale Veröffentlichungsnummer: WO00007937

(56) Entgegenhaltungen:
- PATENT ABSTRACTS OF JAPAN vol. 010, no. 350 (C-387), 26. November 1986 (1986-11-26) & JP 61 151023 A (HASHIMOTO KASEI KOGYO KK), 9. Juli 1986 (1986-07-09) in der Anmeldung erwähnt
- PATENT ABSTRACTS OF JAPAN vol. 010, no. 350 (C-387), 26. November 1986 (1986-11-26) & JP 61 151024 A (HASHIMOTO KASEI KOGYO KK), 9. Juli 1986 (1986-07-09) in der Anmeldung erwähnt
- PATENT ABSTRACTS OF JAPAN vol. 006, no. 024 (C-091), 12. Februar 1982 (1982-02-12) & JP 56 145113 A (MORITA KAGAKU KOGYO KK), 11. November 1981 (1981-11-11) in der Anmeldung erwähnt
- PATENT ABSTRACTS OF JAPAN vol. 1999, no. 11, 30. September 1999 (1999-09-30) & JP 11 157830 A (CENTRAL GLASS CO LTD), 15. Juni 1999 (1999-06-15)
- DATABASE WPI Section Ch, Week 198410 Derwent Publications Ltd., London, GB; Class E34, AN 1984-060674 XP002125559 & SU 1 013 405 A (MOSC AGRIC ACAD), 23. April 1983 (1983-04-23) in der Anmeldung erwähnt

## Beschreibung

Die Erfindung betrifft ein Verfahren zur Herstellung von hochreinem LiBF₄ in Diethylether sowie dessen Verwendung zur Herstellung von Lithiumionenbatterien.

LiBF₄ kann als Leitsalz für Elektrolyte in Primär- und Sekundärelementen eingesetzt werden. Insbesondere wird es in wiederaufladbaren Lithiumionenbatterien eingesetzt. Bei den Elektrolyten handelt es sich um nichwässrige Lösungen von LiBF₄ in organischen Medien, z.B. in Diethylcarbonat, Dimethylcarbonat, Ethylencarbonat oder Propylencarbonat und anderen, bzw. Gemische der genanntan Lösungsmittel.

An die Reinheit des LiBF₄ für diese Anwendung werden sehr hohe Anforderungen gestellt. Insbesondere ist es erforderlich, dass das LiBF₄ einen sehr niedrigen Gehalt an freiem Fluorwasserstoff, einen niedrigen Wassergehalt und nur sehr geringe Mengen an Fremdmetallionen enthält. Auch Verunreinigungen mit organischen Kohlenstoffverbindungen müssen vermieden werden.

Zur Herstellung von LiBF₄ sind verschiedene Methoden bekannt.

In JP-A 61 151023 und JP-A 61 151024 werden Verfahren beschrieben, bei denen LiF mit BF₃ in flüssigem HF zu LiBF₄ umgesetzt wird. Anschließend müssen in einem zweiten Verfahrensschritt Verunreinigungen durch Behandlung mit elementarem Fluor in Inertgasen oder inerten Lösungsmitteln entfernt werden. Das Arbeiten mit flüssigem HF und mit elementarem F₂ ist aber gefährlich, so dass aufwendige Sicherheitsvorkehrungen nötig sind.

Um die Herstellung in flüssigem HF zu vermeiden, ist auch die Herstellung in organischen Lösungsmitteln beschrieben worden.

In der SU 1013405 wird die Herstellung von LiBF₄ in Tetrahydrofuran, in dem LiBF₄ gut löslich ist, durch Umsetzung von LiF mit BF₃ in Ausbeuten zwischen 86 - 89 % beschrieben. Das Produkt wird durch Eindampfen der THF-Lösung isoliert. Dies führt in der Regel zu einen Produkt welches noch erhebliche Mangen an restlichem THF aufweist. Zur vollständigen Entfernung von THF wird eine 10 bis 15 stündige Trocknung im Vakuum bei 70 - 80°C unter Anwendung spezieller Temperaturprogramme vorgeschlagen. Eine derartige Vorgehensweise ist umständlich und teuer.

JP-A 56 145113 offenbart ein Verfahren zur Herstellung von LiBF₄ durch Umsetzung von LiF mit BF₃ in nichtwässrigen organischen Lösungsmitteln, in denen LiBF₄ gut löslich und die Komplexe mit BF₃ bilden können. Als Beispiele werden Tetrahydrofuran, Dimethoxyethan, Ethylacetat oder Propylencarbonat genannt. Nach der Reaktion von LiF mit BF₃ werden Verunreinigungen abfiltriert. Das Auskristallisieren von LiBF₄ aus dem Filtrat erfolgt durch Sättigung der Lösung mit BF₃. BF₃ bildet mit dem Lösungsmittel einen Komplex, in dem sich LiBF₄ schlecht löst und auskristallisiert. Problematisch ist bei diesem Verfahren die vollständige Entfernung von anhaftendem BF₃ und dass ein erheblicher Überschuss von BF₃ eingesetzt werden muss. Diethylether wird für das genannte Verfahren nicht eingesetzt, denn die Löslichkeit von LiBF₄ in Diethylether beträgt bei 25°C nur 1,3 g/ 100 ml (JACS, 75 (1953) 1753).

Es ist auch ein Verfahren zur Herstellung von LiBF₄ in Diethylether durch Umsetzung von Lithiumcarbonat mit Bortrifluorid gemäss der Reaktionsgleichung 3 Li₂CO₃ + 8 BF₃ → 6 LiBF₄ + 3 CO₂ + B₂O₃ offenbart worden (JACS, 75 (1953) 1753). Das als Koppelprodukt gebildete B₂O₃ sowie ungelöstes LiBF₄ werden abfiltriert und das Filtrat zur Gewinnung von LiBF₄ eingedampft. Weitere Anteile von LiBF₄ müssen durch Extraktion des abfiltrierten B₂O₃/LiBF₄-Gemisches mit Diethylether isoliert werden. Dieses Verfahren ist jedoch nicht wirtschaftlich. Zum einen müssen aufgrund der geringen Löslichkeit von LiBF₄ in Diethylether grosse Mengen an Lösungsmittel eingesetzt und wieder eingedampft werden, ohne dass dies eine zusätzliche Extraktion des Rückstandes überflüssig machen würde. Zudem wird ein Teil des BF₃ in B₂O₃ als Koppelprodukt umgewandelt.

Aufgabe der vorliegenden Erfindung war es daher, ein einfaches Verfahren zur wirtschaftlichen Herstellung von hochreinem LiBF₄, welches zur Herstellung vom Lithium-Ionenbatterien verwendbar ist, bereitzustellen.

Überraschenderweise wurde gefunden, dass es trotz der geringen Löslichkeit von LiBF₄ in Diethylether möglich ist, mittels eines einfachen und wirtschaftlichen Verfahrens LiF nahezu vollständig mit BF₃-Etherat umzusetzen und LiBF₄ mit hoher Reinheit herzustellen.

Dem entsprechend wurde ein Verfahren zur Herstellung von hochreinem LiBF₄ durch Bereiten einer Lösung von BF₃-Etherat in Diethylether, Suspendieren von LiF in dieser Lösung, Umsetzen zu festem LIBF₄, gefolgt von Abtrennen des gebildeten, festen LiBF₄ gefunden.

Zum erfindungsgemäßen Verfahren wird BF₃-Etherat eingesetzt. Bevorzugt wird das BF₃-Etherat mit Diethylether verdünnt. Die Lösung von BF₃-Etherat in Diethylether kann durch Verdünnen von reinem BF₃-Etherat mit Diethylether bereitet werden. Es ist auch möglich, gasförmiges BF₃ in der gewünschten Menge in Diethylether einzuleiten. Bevorzugt beträgt das molare Verhältnis Diethylether / BF₃-Etherat 0,1 bis 3, besonders bevorzugt 0,5 bis 1,5.

Zu dieser Lösung wird feines LiF zugegeben und in der Lösung suspendiert. Vorteilhaft wird LiF vor der Zugabe gemahlen. Es ist aber auch möglich, LiF in Diethylether zu suspendieren, und diese Suspension reinem BF₃-Etherat oder einer Lösung von BF₃-Etherat in Diethylether zuzusetzen, oder BF₃-Gas in die Suspension einzuleiten. BF₃-Etherat wird mindestens stöchiometrisch zu LiF eingesetzt. Es ist vorteilhaft, mit einem geringen Überschuss von BF₃-Etherat zu arbeiten, aber das Molverhältnis BF₃-Etherat / LiF sollte nicht größer als 1,2 sein. Bevorzugt beträgt das Molverhältnis BF₃-Etherat/LiF 1 bis 1,1.

Die Reaktion wird im Regelfalle unter Erwärmen durchgeführt. Bevorzugt wird bis zum Rückfluss erhitzt. Die Reaktionszeit richtet sich nach der gewählten Temperatur. In der Regel lässt man 4 bis 10 h reagieren. Es ist aber auch möglich, bei Raumtemperatur zu arbeiten, wobei sich die Reaktionszeit entsprechend verlängert.

Die Suspendierung von LiF und die Reaktion zu LiBF₄ werden vorteilhaft unter intensiver Vermischung, bspw. unter Zuhilfenahme von Rührern oder Dispergieraggregaten durchgeführt. Derartige Mischaggregate und Apparaturen sind an sich bekannt.

Das nach der Reaktion weitgehend suspendiert im Diethylether vorliegende LiBF₄ wird mittels an sich bekannter Verfahren, wie Filtration, Druckfiltration, Zentrifugieren oder Dekantieren abgetrennt und getrocknet. Es ist vorteilhaft, die Suspension vor dem Abfiltrieren zumindest auf Raumtemperatur abzukühlen.

Überraschenderweise setzt sich das suspendierte LiF mit dem BF₃ trotz der geringen Löslichkeit von LiBF₄ in Diethylether nahezu vollständig zu LiBF₄ um. Der Anteil von LiF im Endprodukt LiBF₄ beträgt maximal 2 Gew.%, im Regelfalle unter 1%. Das Endprodukt zeichnet sich weiterhin durch nur geringe Anteile saurer Verunreinigungen, geringe Feuchtigkeit und geringe Schwermetallanteile aus. Die Entfernung des leichtflüchtigen Diethylethers aus dem Endprodukt gelingt problemlos. Der Restanteil an organischem Kohlenstoff (total organic carbon, TOC) ist kleiner als 0,1 Gew %.

Aufgrund dieser Reinheit ist das nach dem erfindungsgemäßen Verfahren hergestellte LiBF₄ hervorragend zur Verwendung als Leitsalz in Lithiumionenbatterien geeignet.

Die folgenden Beispiele sollen die Erfindung näher erläutern, ohne dass dadurch der Umfang der Erfindung eingeschränkt wird.

### Beispiel 1

BF₃-Etherat (474,5 g; 3,24 mol) wurden mit 400 ml Diethylether (3,85 mol) verdünnt und im Teflonreaktor vorgelegt (Molverhältnis Diethylether/BF₃-Etherat:1,19). In diese Lösung wurde Lithiumfluorid von Merck, Suprapur (84 g, 3,24 mol) unter Rühren und Argonabdeckung eingetragen (Molverhältnis BF₃-Etherat/LiF:1,0). Danach wurde 7 h am Rückfluss gerührt, wobei die Siedetemperatur von 40 auf 35°C abnahm. Die Suspension wurde auf 15 °C abgekühlt, auf einen Druckfilter überführt, filtriert und der Filterkuchen mit Diethylether nachgewaschen. Die isolierten Kristalle wurden 1 h im Stickstoffstrom und anschließend im Vakuum bei 6 mbar getrocknet.

Isoliertes Produkt: 254 g LiBF₄ (84 % d. Th.) Das B und F-NMR-Spektrum der Substanz zeigten jeweils nur einen Peak von LiBF₄.

Saure Verunreinigungen (als HF): 100 ppm.
LiF: 2 %
Na, Fe, Ca, Al: je < 1 ppm
TOC: 0,02 %
Feuchtigkeit: < 100 ppm

### Beispiel 2

BF₃-Etherat (461,0 g; 3,24 mol) wurde ohne Vorbehandlung mit 400 ml Diethylether (3,85 mol) verdünnt und im Teflonreaktor vorgelegt (Molverhältnis Diethylether / BF₃-Etherat: 1,19). In diese Lösung wurde Lithiumfluorid von Merck, Suprapur (84 g, 3,24 mol) unter Rühren und Argonabdeckung eingetragen (Molverhältnis BF₃-Etherat / LiF : 1,0). Danach wurde 5 h am Rückfluss gerührt, wobei die Siedetemperatur von 42 auf 35 °C abnahm. Die Suspension wurde nun filtriert und der Filterkuchen mit Diethylether gewaschen. Nach dem Trocknen wurden 240 g (31 % d. Th.) LiBF₄ erhalten. Das Produkt wurde nun noch einmal in Diethylether aufgerührt, filtriert, mit Diethylether gewaschen und gemäß Beispiel 1 getrocknet.

Gemäß F-NMR bestand das Produkt aus reinem LiBF₄.

Saure Verunreinigungen (als HF) : < 100 ppm
LiF: 0,78 %
Na, Fe, Ca, Al: je < 1 ppm
TOC: 0,03 %

LiBF₄ wurde zur Herstellung einer Elektrolytlösung in einem Gemisch aus Diethylcarbonat/Ethylencarbonat gelöst (1 mol/l). Die Lösung wurde zur Entfernung von LiF-Resten filtriert. Der Wassergehalt der Lösung betrug < 10 ppm. Restsäure (als HF): 6 ppm.

## Patentansprüche

1. Verfahren zur Herstellung von hochreinem LiBF₄ in Diethylether **gekennzeichnet durch** Bereiten einer Lösung von BF₃-Etherat in Diethylether, Suspendieren von LiF in dieser Lösung, Umsetzen zu festem LiBF₄, gefolgt von Abtrennen des gebildeten, festen LiBF₄.

2. Verfahren zur Herstellung von hochreinem LiBF₄ in Diethylether gemäß Anspruch 1, **dadurch gekennzeichnet, dass** das molare Verhältnis BF₃-Etherat / LiF 1 bis 1,2 beträgt.

3. Verfahren zur Herstellung von hochreinem LiBF₄ in Diethylether gemäß Anspruch 1 oder 2, **dadurch gekennzeichnet, dass** das molare Verhältnis Diethylether / BF₃-Etherat 0,1 bis 3 beträgt.

## Claims

1. A process for preparing highly pure LiBF₄ in diethyl ether, which comprises preparing a solution of BF₃ etherate in diethyl ether, suspending LiF in this solution, reacting to give solid LiBF₄ and then separating off the solid LiBF₄ formed.

2. A process for preparing highly pure LiBF₄ in diethyl ether as claimed in claim 1, wherein the molar ratio of BF₃ etherate to LiF is from 1 to 1.2.

3. A process for preparing highly pure LiBF₄ in diethyl ether as claimed in claim 1 or 2, wherein the molar ratio of diethyl ether to BF₃ etherate is from 0.1 to 3.

## Revendications

1. Procédé pour la préparation de LiBF₄ de grande pureté dans l'éther diéthylique, caractérisé en ce l'on prépare une solution constituée d'éthérate de BF₃ dans l'éther diéthylique, que l'on met du LiF en suspension dans cette solution, et que l'on réalise une réaction donnant le LiBF₄ solide suivi d'une séparation du LiBF₄ solide formé.

2. Procédé pour la préparation de LiBF₄ de grande pureté dans l'éther diéthylique selon la revendication 1, **caractérisé en ce que** le rapport molaire éthérate de BF₃ /LiF est compris entre 1 et 1,2.

3. Procédé pour la préparation de LiBF₄ de grande pureté dans l'éther diéthylique selon la revendication 1 ou 2, **caractérisé en ce que** le rapport molaire éther diéthylique / éthérate de BF₃ est compris entre 0,1 et 3.
